# EUROPÄISCHE PATENTSCHRIFT

(11) **EP 3 915 829 B1**
(45) Veröffentlichungstag und Bekanntmachung des Hinweises auf die Patenterteilung: **30.11.2022**
(21) Anmeldenummer: 21175880.0
(22) Anmeldetag: 26.05.2021
(51) Int. Cl.: B60N 2/30, B60N 2/12, B60N 2/20, B60N 2/235

(54) **FAHRZEUGSITZBESCHLAG UND FAHRZEUGSITZ**
VEHICLE SEAT FITTING AND VEHICLE SEAT
FERRURE DE SIÈGE DE VÉHICULE ET SIÈGE DE VÉHICULE

(30) Priorität: 28.05.2020 DE 102020114396
(43) Veröffentlichungstag der Anmeldung: 01.12.2021
(73) Patentinhaber: Faurecia Autositze GmbH, 31655 Stadthagen (DE)
(72) Erfinder: Westphal, Maximilian, 30177 Hannover (DE); Lasak, Grzegorz, 05-600 Grójec (PL); Endres, Marius-Ricardo, 30451 Hannover (DE); Dryglewski, Pawel, 05-600 Grójec (PL); Chyla, Krzysztof, 37-450 Stalowa Wola (PL)
(74) Vertreter: REHBERG HÜPPE + PARTNER

(56) Entgegenhaltungen:
- EP-A2- 0 872 375
- DE-A1-102005 040 629
- DE-B3-102008 061 037
- US-A1- 2007 170 764

## Beschreibung

### TECHNISCHES GEBIET DER ERFINDUNG

In Kraftfahrzeugen gewährleisten Fahrzeugsitzbeschläge alternativ oder kumulativ die folgenden Funktionen:
a) Der Fahrzeugsitzbeschlag muss einen eingestellten Neigungswinkel zwischen einem Sitzteil des Fahrzeugsitzes einem zugeordneten Sitz-Beschlagteil einerseits und einer Lehne des Fahrzeugsitzes mit einem zugeordneten Lehnen-Beschlagteil sichern, was mittels einer Selbsthemmung eines Neigungsverstellgetriebes erfolgen kann und/oder mittels einer zusätzlichen Verrastung, Verriegelung oder anderweitigen Fixierung.
b) Des Weiteren muss eine Neigungsverstellung möglich sein, wobei die Neigungsverstellung durch Betätigung eines zwischen Sitz-Beschlagteil und Lehnen-Beschlagteil angeordneten Neigungsverstellgetriebes erfolgt. Hierbei kann die Neigungsverstellung von dem Benutzer manuell durch Betätigung eines Verstellrads und/oder durch einen elektromotorischen Antrieb, der von dem Benutzer aktiviert wird, herbeigeführt werden. Als Neigungsverstellgetriebe findet üblicherweise ein Stirnradgetriebe, insbesondere in Ausgestaltung als Exzenterumlaufgetriebe, Einsatz, wobei beispielsweise ein Zahnrad mit einer Außenverzahnung von dem Lehnen-Beschlagteil ausgebildet oder gehalten sein kann, welches an einem von dem Sitz-Beschlagteil ausgebildeten oder gehaltenen Zahnrad mit einer Innenverzahnung abwälzt. Hierbei ist die Zähnezahl der Innenverzahnung um einen Zahn oder mehrere Zähne größer als die Zähnezahl der Außenverzahnung, um die erforderliche Übersetzung herbeizuführen. Hinsichtlich der Ausgestaltung eines Neigungsverstellgetriebes wird beispielshaft auf DE 44 36 101 A1 verwiesen.
c) An einer Antriebswelle, über die auf beiden Seiten des Fahrzeugsitzes angeordnete Fahrzeugsitzbeschläge miteinander gekoppelt sind und über die ein manuell erzeugtes Moment und/oder ein elektromotorisch erzeugtes Moment zur Neigungsverstellung übertragen wird, ist über eine Exzenterverbindung das Zahnrad mit der Außenverzahnung (und mit diesem das Lehnen-Beschlagteil) exzentrisch gelagert, so dass das Zahnrad mit der Außenverzahnung in Verlängerung des Exzenterhöchstpunkts in das Zahnrad mit der Innenverzahnung gedrückt wird. Hierbei ist die Exzenterverbindung üblicherweise reibschlüssig ausgebildet, wozu zwischen einer Innenfläche des Zahnrads mit der Außenverzahnung (oder eines zugeordneten Lagerrings) und einer Außenfläche eines von der Antriebswelle verdrehten Lagerkörpers ein Exzenter-Ringspalt ausgebildet mit in Umfangsrichtung variierender Ringspalthöhe. In dem Exzenter-Ringspalt sind ein drehfest mit der Antriebswelle verbundenes Narbenkörpersegment sowie zwei Keilsegmenten angeordnet. Die Keilsegmente sind in Umfangsrichtung keilförmig mit gekrümmten Keilflächen ausgebildet und werden über eine Spreizfeder in Umfangsrichtung so auseinander gedrückt, dass diese zwischen der zylindrischen Innenfläche und der zylindrischen Außenfläche verklemmt werden. Eine derartige reibschlüssige Exzenterverbindung ist beispielsweise in DE 44 36 101 A1 beschrieben.

US-A-2007/170764 beschreibt einen Fahrzeugsitzbeschlag.
d) Handelt es sich bei dem Fahrzeugsitz um einen Vordersitz und soll der Innenraum des Fahrzeugs hinter dem Vordersitz durch Verschwenken der Lehne des Vordersitzes nach vorne zugänglich gemacht werden, beispielsweise um zu ermöglichen, dass ein Passagier sich durch die vordere Tür an dem Vordersitz vorbei auf eine Rückbank setzen kann, muss eine Entriegelung der Lehne ermöglicht werden, um ein freies Verschwenken der Lehne unabhängig von dem Neigungsverstellgetriebe zu ermöglichen. Hierzu ist die Lehne nicht fest mit dem zugeordneten Zahnrad des Neigungsverstellgetriebes verbunden. Vielmehr verfügt das Zahnrad über eine Verriegelungskontur, in die zur drehfesten Verbindung zwischen Sitz-Beschlagteil und Zahnrad ein Verriegelungshebel eingreift. Ist eine freie Verschwenkung der Lehne erforderlich, wird über ein Lehnen-Löseelement der Verriegelungshebel außer Eingriff mit der Verriegelungskontur gebracht. In bekannten Lehnen-Löseeinrichtungen ist im oberen Endbereich der Lehne ein Betätigungselement, insbesondere ein Betätigungshebel vorgesehen, über den dann mittels eines Seilzuges ein Lehnen-Löseelement in Form eines Lehnen-Lösebolzens bewegt werden kann, der wiederum den Verriegelungshebel außer Eingriff mit der Verriegelungskontur schwenkt. Eine derartige Lehnen-Löseeinrichtung ist beispielsweise aus DE 197 15 764 C2 bekannt.
e) Üblicherweise ist ein Fahrzeugsitz über Schienen im Bodenbereich des Fahrzeugs in Längsrichtung verschieblich, wobei die Verschiebung manuell oder über einen elektrischen Antrieb erfolgen kann. Eine einmal eingestellte Längsposition des Fahrzeugsitzes ist über eine Längsfixierung, insbesondere eine für die manuelle Längsverschiebung manuell lösbare Fahrzeugsitz-Längsverriegelung, gesichert. Wünschenswert kann dann sein, dass mit einer Betätigung der Lehnen-Löseeinrichtung zur Ermöglichung einer freien Verschwenkung der Lehne auch eine Lösung der Längsfixierung erfolgt, um mit der Verschwenkung der Lehne nach vorne auch das Sitzteil des Fahrzeugsitzes in der Schiene nach vorne zu schieben. Zu diesem Zweck kann der Fahrzeugsitzbeschlag ein Längsentriegelungsrad aufweisen. Dieses Längsentriegelungsrad ist grundsätzlich relativ zu dem Lehnen-Beschlagteil drehbar. Das Längsentriegelungsrad weist dabei ein Längsentriegelungselement auf, welches insbesondere über einen Bowdenzug mit der Längsfixierung des Fahrzeugsitzes so gekoppelt ist, dass bei einer Verdrehung des Längsentriegelungsrads die Längsfixierung des Fahrzeugsitzes gelöst werden kann. Zu diesem Zweck kann ein Mitnehmerhebel verschwenkbar an dem Lehnen-Beschlagteil gelagert sein. Durch eine Betätigung der Lehnen-Löseeinrichtung und eine hierdurch ausgelöste Bewegung des Lehnen-Löseelements kann der Mitnehmerhebel in eine Mitnehmerstellung verschwenkt werden. In der Mitnehmerstellung kommt der Mitnehmerhebel (u. U. nach einer kleinen freien Verschwenkung des Lehnen-Beschlagteils nach vorne) mit einem Mitnehmer des Längsentriegelungsrads in Eingriff. Auf diese Weise erfolgt die drehfeste Kopplung des Längsentriegelungsrads mit dem Lehnen-Beschlagteil, so dass eine Verschwenkung des Lehnen-Beschlagteils mit einer Verdrehung des Längsentriegelungsrads, einer Betätigung des Bowdenzugs und der Lösung der Längsfixierung des Fahrzeugsitzes einhergeht. Hinsichtlich beispielhafter Ausgestaltungen derartiger Längsfixierungs-Löseeinrichtungen an einem Fahrzeugsitzbeschlag wird beispielsweise verwiesen auf die Druckschriften DE 10 2006 001 530 A1, DE 10 2005 060 484 A1 und DE 10 2010 026 702 A1.

Obige Ausführungen für ein freies Verschwenken der Lehne nach vorne gemäß d) und/oder eine Bewegung des Sitzteils des Fahrzeugsitzes nach vorne gemäß e) werden auch als sogenannte "Easy-Entry-Funktion" bezeichnet. Entsprechend ist bei Betätigung der Lehnen-Löseeinrichtung auch ein Verschwenken der Lehne nach hinten und/oder eine Bewegung des Sitzteils des Fahrzeugsitzes nach hinten möglich. Des Weiteren möglich ist, dass je nach Ausmaß der Betätigung der Lehnen-Löseeinrichtung zunächst lediglich eine freie Verschwenkung der Lehne nach vorne für einen ersten Schwenkwinkel erfolgt, ohne dass die Längsfixierung des Fahrzeugsitzes gelöst wird, während dann mit einer weiteren Verschwenkung über den ersten Schwenkwinkel hinaus auch das Lösen der Längsfixierung erfolgen kann, so dass die freie Verschiebung des Sitzteils entlang der Schienen möglich ist.

Die vorliegende Erfindung betrifft einen Fahrzeugsitzbeschlag, der insbesondere einzelne oder sämtliche der zuvor genannten Funktionen gewährleistet und hierfür die erforderlichen Einrichtungen aufweist, sowie einen mit mindestens einem derartigen Fahrzeugsitzbeschlag ausgestatteten Fahrzeugsitz.

### STAND DER TECHNIK

EP 2 352 660 B1 beschreibt einen Fahrzeugsitz mit Easy-Entry-Funktion und elektromotorischer Neigungsverstellung. Die Lehnen-Löseeinrichtung verfügt hier über einen Lehnen-Lösebolzen, der durch Betätigung eines Lehnen-Lösehebels im oberen Endbereich der Lehne und einen Bowdenzug in eine Entriegelungsrichtung bewegt werden kann. Die Entriegelungsbewegung des Lehne-Lösebolzens führt einerseits zur Entriegelung der Kopplung des Lehnen-Beschlagteils über ein Neigungsverstellgetriebe mit dem Sitz-Beschlagteil, um die freie Verschwenkung der Lehne zu ermöglichen. Andererseits befindet sich der Lehnen-Lösebolzen in Eingriff mit einem Langloch eines Mitnehmerhebels, wobei der Lehnen-Lösebolzen über eine drehbar an dem Lehnen-Beschlagteil gelagerte Führungsscheibe mit einer Bewegungskomponente quer zu den führenden Begrenzungen des Langlochs des Mitnehmerhebels geführt ist. Die Bewegung des Lehnen-Lösebolzens führt somit zu einer Verschwenkung des Mitnehmerhebels in eine Mitnehmerstellung. In der Mitnehmerstellung kommt der Mitnehmerhebel in Eingriff mit einem Mitnehmer eines Längsentriegelungsrads, welches infolge der Kopplung über den Mitnehmerhebel bei der Verschwenkung des Lehnen-Beschlagteils mit verschwenkt wird, womit die Fahrzeugsitz-Längsverriegelung gelöst wird. EP 2 352 660 B1 beschreibt das Problem, dass in einem sehr seltenen, aber aus Sicherheitsgründen wesentlichen Fall, hier bei einem Versagen eines Mikroschalters zur Begrenzung des Einstellbereichs der Lehne, das Problem auftreten kann, dass der Mitnehmerhebel nicht in Eingriff mit dem Längsentriegelungsrad kommen kann, sondern vielmehr auf einem Rücken eines Mitnehmers des Längsentriegelungsrads zur Anlage kommt, womit die Bewegung des Mitnehmerhebels in die Mitnehmerstellung blockiert ist. Ein entsprechendes Problem kann sich bei einer manuellen Verstellung des Neigungswinkels der Lehne ergeben, wenn diese über eine vorderste Winkelstellung hinaus erfolgt. Um auch in diesen Fällen die volle Bewegung des Lehnen-Lösebolzens und der Kopplungsstelle mit dem Langloch des Mitnehmerhebels zu ermöglichen, schlägt EP 2 352 660 B1 vor, dass der Mitnehmerhebel zwei Hebelteile aufweist. Jedes Hebelteil ist dabei verdrehbar um dieselbe Schwenkachse an dem Schwenklager des Mitnehmerhebels gelagert. Das erste Hebelteil bildet das Langloch für die Kopplung mit dem Lehnen-Lösebolzen aus. Hingegen bildet das andere Hebelteil, welches sich entgegengesetzt zu dem ersten Hebelteil von dem Schwenklager erstreckt, in dem dem Schwenklager abgewandten Endbereich eine Mitnehmernase ausbildet. Der Dreh-Freiheitsgrad der Hebelteile um das Schwenklager ist in eine Richtung für eine Ausrichtung der Hebelteile mit einem Umfangswinkel von ca. 180° durch einen Anschlag begrenzt. Eine als Schenkelfeder ausgebildete Feder beaufschlagt die beiden Hebelteile mit einer Vorspannung gegen den Anschlag, womit eine Grundstellung der Hebelteile vorgegeben ist. In dieser Grundstellung kann der Mitnehmerhebel mit den beiden Hebelteilen in Eingriff mit dem Mitnehmer des Längsentriegelungsrads kommen, womit die Entriegelung der Fahrzeugsitz-Längsverrieglung wie zuvor beschrieben möglich ist. Kommt hingegen die Mitnehmernase des zweiten Hebelteils zur Anlage an einen Rücken des Mitnehmers des Längsentriegelungsrads, können die Hebelteile die durch den Anschlag vorgegebene Grundstellung unter Beaufschlagung der Feder verlassen, womit sich der Winkel der Hebelteile von der gestreckten Stellung von ca. 180° in Richtung eines überstumpfen Winkels verändert. Obwohl somit das zweite Hebelteil nicht in die Mitnehmerstellung bewegt werden kann, kann mit zunehmender Verschwenkung der Hebelteile und zunehmender Beaufschlagung der Feder das erste Hebelteil weiter von dem Lehnen-Lösebolzen bewegt werden, womit das freie Verschwenken des Lehnen-Beschlagteils gegenüber dem Sitz-Beschlagteil ungeachtet der Blockade des zweiten Hebelteils ermöglicht wird. EP 2 352 660 B1 beschreibt auch, dass der Mitnehmerhebel gemäß einer nicht dargestellten Variante einstückig ausgebildet sein kann. In diesem Fall sollen die beiden miteinander verbunden ausgebildeten Hebelteile ein Abknicken um die Schwenkachse in eine Richtung ermöglichen, während bei einer Belastung in entgegengesetzter Richtung der Mitnehmerhebel starr ausgebildet ist. Zu diesem Zweck soll ein die vorgenannte Feder ersetzender Federbereich, nämlich ein elastischer Bereich, an dem Mitnehmerhebel zwischen den beiden Hebelteilen vorgesehen werden, welcher unter Aufbau einer elastischen Kraft als Rückstellkraft in einer Richtung gebogen werden kann und welchem auf der gegenüberliegenden Seite benachbart ein Anschlagbereich zugeordnet sein soll, an welchen der Federbereich bei einer entsprechenden Belastung anliegen kann, womit sich insgesamt die gleiche Funktion ergeben soll, also die dann einstückig miteinander verbundenen Hebelteile weiterhin um die gemeinsame Schwenkachse relativ zueinander in eine Richtung verschwenkbar sein sollen.

Weiterer Stand der Technik ist aus den Druckschriften DE 10 2005 040 629 A1, DE 10 2007 011 999 A1, DE 20 2008 008 312 U1 und DE 20 2011 110257 U1 bekannt.

### AUFGABE DER ERFINDUNG

Der vorliegenden Erfindung liegt die Aufgabe zugrunde, einen Fahrzeugsitzbeschlag vorzuschlagen, der insbesondere hinsichtlich
- der Vermeidung einer Blockierung eines Mitnehmerhebels und/oder einer Betätigung der Lehnen-Löseeinrichtung,
- der konstruktiven Ausgestaltung eines Mitnehmerhebels mit den erforderlichen Freiheitsgraden,
- des Bauaufwands,
- der Betätigungskinematik für das Entriegeln einer Fahrzeugsitz-Längsverriegelung bei Betätigung einer Lehnen-Löseeinrichtung verbessert ist. Des Weiteren liegt der Erfindung die Aufgabe zugrunde, einen Fahrzeugsitz mit einem entsprechend verbesserten Fahrzeugsitzbeschlag vorzuschlagen.

### LÖSUNG

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen zu entnehmen.

### BESCHREIBUNG DER ERFINDUNG

Der erfindungsgemäße Fahrzeugsitzbeschlag ist bestimmt für einen Fahrzeugsitz, der eine Fahrzeugsitz-Längsentriegelung aufweist. Eine Betätigung der Fahrzeugsitz-Längsentriegelung erfolgt über einen Mitnehmerhebel. Der Mitnehmerhebel weist erfindungsgemäß drei Teile auf, nämlich ein Lagerteil, ein Mitnehmerteil und ein Federteil.

Das Lagerteil dient einerseits der drehbaren Lagerung des Mitnehmerhebels drehbar um eine Schwenkachse an dem Lehnen-Beschlagteil. Andererseits kann das Lagerteil geeignet ausgebildet sein für den Eingriff des Lehnen-Löseelements, um die Betätigung des Mitnehmerhebels zu ermöglichen und damit auch eine Betätigung der Fahrzeugsitz-Längsentriegelung zu ermöglichen.

Das Mitnehmerteil dient der Herstellung des Eingriffs mit einem Längsentriegelungsrad in der Mitnehmerstellung, womit eine drehfeste Verbindung zwischen dem Mitnehmerteil und dem Längsentriegelungsrad hergestellt wird oder die Übertragung der Drehbewegung des Lehnen-Beschlagteils an die Drehbewegung des Längsentriegelungsrads ermöglicht wird.

Mittels des Federteils ist das Mitnehmerteil an dem Lagerteil gehalten. Hierbei bildet das Federteil eine Art Kragträger, der auf Biegung beansprucht ist und zwischen dem Lagerteil und dem Mitnehmerteil angeordnet ist.

Erfindungsgemäß verfügt das Mitnehmerteil über zwei Freiheitsgrade:
Einerseits ist das Mitnehmerteil gemeinsam mit dem Lagerteil um die Schwenkachse des Lagerteils verdrehbar. Dieser Freiheitsgrad des Mitnehmerteils wird genutzt, um für den Normalbetrieb die Verschwenkung des Mitnehmerhebels und damit auch das Mitnehmerteils in die Mitnehmerstellung zu ermöglichen.

Darüber hinaus verfügt das Mitnehmerteil über einen Freiheitsgrad gegenüber dem Lagerteil entsprechend der Durchbiegung des Federteils, wobei die Biegelinie des Federteils dazu führt, dass die Verdrehung des Mitnehmerteils mit der Durchbiegung des Federteils um eine Achse erfolgt, die nicht mit der Schwenkachse des Lagerteils zusammenfällt. Diese Achse ergibt sich aus dem Momentanpol des Mitnehmerteils infolge der Durchbiegung des Federteils, wobei auch die Position der Achse je nach Durchbiegung des Federteils unterschiedlich sein kann.

Hierdurch kann eine veränderte Kinematik der Ausgleichsbewegung erzielt werden, wenn das Mitnehmerteil in den eingangs erläuterten Problemfällen zur Anlage an einen Rücken eines Mitnehmervorsprungs des Längsentriegelungsrads kommt.

Im Rahmen der Erfindung können das Lagerteil, das Mitnehmerteil und das Federteil einstückig ausgebildet sein, wobei dann das Federteil eine mindestens um eine Größenordnung größere elastische Steifigkeit um die genannte Biegeachse aufweist als das Lagerteil und das Mitnehmerteil. Vorzugsweise sind das Lagerteil, das Mitnehmerteil und das Federteil aber aus mehreren Halbzeugen oder Vorprodukten hergestellt oder diese sind sogar mehrstückig ausgebildet und dann miteinander montiert. Möglich ist beispielsweise, dass das Federteil aus einem anderen Material hergestellt ist als das Mitnehmerteil und/oder das Lagerteil. So können beispielsweise das Mitnehmerteil und das Lagerteil aus Kunststoff hergestellt sein, während das Federteil aus einem Metall hergestellt sein kann.

Für eine Ausgestaltung des Fahrzeugsitzbeschlags verfügt dieser über ein Sitz-Beschlagteil und ein Lehnen-Beschlagteil. In dem Fahrzeugsitzbeschlag ist ein Neigungsverstellgetriebe, insbesondere ein Exzentergetriebe, vorhanden, über welches ein Neigungswinkel des Sitz-Beschlagteils gegenüber dem Lehnen-Beschlagteil veränderbar ist, wobei diese Veränderung manuell und/oder durch einen elektrischen Antrieb herbeigeführt werden kann. Der erfindungsgemäße Fahrzeugsitzbeschlag verfügt auch über eine Lehnen-Löseeinrichtung. Bei Betätigung der Lehnen-Löseeinrichtung ist das Lehnen-Beschlagteil frei gegenüber dem Sitz-Beschlagteil verschwenkbar, was vorzugsweise zwecks Gewährleistung einer Easy-Entry-Funktion erfolgt. Das Lehnenentriegelungsrad ist in diesem Fall relativ zu dem Lehnen-Beschlagteil (und insbesondere auch relativ zu dem Sitz-Beschlagteil) drehbar gelagert. Das Lehnenentriegelungsrad verfügt über ein Lehnenentriegelungselement, welches mit einer Fahrzeugsitz-Längsverriegelung so koppelbar ist, dass bei einer Verdrehung des Längsentriegelungsrads die Fahrzeugsitz-Längsverriegelung entriegelt werden kann. Beispielsweise verfügt das Längsentriegelungsrad im Bereich seines Umfangs über eine Aufnahme oder ein Kopplungselement für einen Endbereich eines Bowdenzugs, dessen anderer Endbereich an einer Fahrzeugsitz-Längsentriegelung angelenkt ist. Der Mitnehmerhebel ist verschwenkbar an dem Lehnen-Beschlagteil gelagert, was im Bereich des Lagerteils erfolgt. Der Mitnehmerhebel ist durch eine Betätigung der Lehnen-Löseeinrichtung in eine Mitnehmerstellung verschwenkbar. In der Mitnehmerstellung kommt der Mitnehmerhebel (unter Umständen nach einer kleinen Verschwenkung des Lehnen-Beschlagteils) in Eingriff mit dem Mitnehmer des Längsentriegelungsrads, womit das Längsentriegelungsrad drehfest mit dem Lehnen-Beschlagteil gekoppelt wird. Es kann somit mittels einer Verschwenkung des Lehnen-Beschlagteils die Fahrzeugsitz-Längsverriegelung entriegelt werden.

Für die Ausgestaltung des Federteils gibt es im Rahmen der Erfindung vielfältige Möglichkeiten. So kann das Federteil beispielsweise als Elastomerkörper, als auf Biegung beanspruchtes Kunststoffteil u. ä. ausgebildet sein. Für einen Vorschlag der Erfindung ist das Federteil ein Blattfederteil. Dieses Blattfederteil kann aus einer einzigen (insbesondere metallischen) Blattfeder bestehen oder mehreren stoffschlüssig aneinander angebundenen oder zwecks Erhöhung der Reibung miteinander verschraubten Blattfedern (gleicher oder unterschiedlicher Längen) bestehen. Ein Endbereich des Blattfederteils ist dann an dem Lagerteil befestigt, während der andere Endbereich des Blattfederteils an dem Mitnehmerteil befestigt und gehalten ist.

Für die Befestigung des Blattfederteils einerseits an dem Lagerteil und andererseits an dem Mitnehmerteil gibt es im Rahmen der Erfindung vielfältige Möglichkeiten. So kann beispielsweise das Blattfederteil an das Lagerteil und/oder das Mitnehmerteil über eine herkömmliche Befestigungseinrichtung, insbesondere eine Verschraubung, befestigt sein. Für eine erfindungsgemäße Ausgestaltung ist das Blattfederteil stoffschlüssig in oder an dem Lagerteil und/oder dem Mitnehmerteil gehalten. So kann das Blattfederteil an das Lagerteil und/oder das Mitnehmerteil angeklebt sein. Möglich ist aber auch, dass das Lagerteil und/oder das Mitnehmerteil an die Blattfeder angespritzt ist oder die Blattfeder in das Lagerteil und/oder das Mitnehmerteil eingespritzt ist, was beispielsweise erfolgen kann, wenn das Lagerteil und/oder das Mitnehmerteil als Spritzgussteil hergestellt sind.

Ein weiterer Aspekt der Erfindung widmet sich der Übertragung der Betätigung der Lehnen-Löseeinrichtung zu der Betätigung des Mitnehmerhebels. Die Erfindung schlägt diesbezüglich vor, dass das Lagerteil eine Lagerteil-Führung aufweisen kann. Beispielsweise kann die Lagerteil-Führung ein Langloch des Lagerteils sein. Das Lehnen-Beschlagteil weist dann eine Lehnen-Führung auf, bei der es sich ebenfalls um ein Langloch handeln kann. Die Lagerteil-Führung und die Lehnen-Führung sind (zumindest über einen Teilbereich) relativ zueinander geneigt. Die Lehnen-Löseeinrichtung weist dann ein Lehnen-Löseelement auf, bei dem es sich insbesondere um einen Lehnen-Lösebolzen oder ein Gleitstück handelt. Das Lehnen-Löseelement ist dann sowohl durch die Lagerteil-Führung als auch durch die Lehnen-Führung geführt, so dass sich dieses mit einer Betätigung der Lehnen-Löseeinrichtung sowohl entlang der Lagerteil-Führung als auch entlang der Lehnen-Führung bewegt. Für das genannte Beispiel erstreckt sich der Lehnen-Lösebolzen durch die beiden relativ zueinander geneigten Langlöcher. Bewegt sich mit der Betätigung der Lehnen-Löseeinrichtung der Lehnen-Lösebolzen entlang der Langlöcher, führt deren relativer Winkel zueinander dazu, dass sich das Lagerteil (und mit diesem der Mitnehmerhebel) relativ zu dem Lehnen-Beschlagteil bewegt, womit die Verschwenkung des Mitnehmerteils in die Mitnehmerstellung herbeigeführt werden kann.

Die Lehnen-Führung und/oder die Lagerteil-Führung (insbesondere die jeweiligen Langlöcher) können durchaus geradlinige Führungsachsen aufweisen, solange diese zueinander geneigt sind. Weiterer Einfluss auf die Betätigungskinematik, hier die Abhängigkeit der Bewegung des Lagerteils von der Bewegung des Lehnen-Löseelements, kann genommen werden, wenn die Lehnen-Führung und/oder die Lagerteil-Führung eine gekrümmte Führungsachse aufweisen, wobei über die Krümmung und den Verlauf der Führungsachse die Betätigungskinematik beeinflusst werden kann. Für die Ausgestaltung der genannten Führungen als Langlöcher weist dann mindestens eines der Langlöcher eine gekrümmte Längs- und Führungsachse auf.

Grundsätzlich kann im Rahmen der Erfindung auch ein Mitnehmerhebel Einsatz finden, bei dem entsprechend EP 2 352 660 B1 der Angriff des Lehnen-Löseelements an dem Mitnehmerhebel einerseits und die Mitnehmernase andererseits auf gegenüberliegenden Seiten des Schwenklagers des Mitnehmerhebels angeordnet sind. Für einen besonderen Vorschlag der Erfindung wird aber vorgeschlagen, dass die Verbindungsachsen
- eines Angriffspunkts des Längs-Löseelements an dem Lagerteil und der Schwenkachse für die Verschwenkung des Lagerteils und
- des Mitnehmerteils und der Schwenkachse für die Verschwenkung des Lagerteils ohne elastische Verformung des Federteils
einen spitzen Winkel bilden. Hierdurch ergibt sich eine besonders kompakte Ausgestaltung des Mitnehmerhebels.

Vorzugsweise verfügt der Fahrzeugsitzbeschlag auch über ein Antriebselement für einen elektrischen Antrieb zur Neigungsverstellung.

Der erfindungsgemäße Fahrzeugsitzbeschlag kann beliebige Anschläge einerseits für eine Neigungsverstellung über das Neigungsverstellgetriebe, für eine Neigungsverstellung mittels eines elektrischen Antriebs und/oder für eine freie Verschwenkung des Lehnen-Beschlagteils gegenüber dem Sitz-Beschlagteil bei betätigter Lehnen-Löseeinrichtung aufweisen. Für einen Vorschlag der Erfindung ist ein multifunktionaler Anschlag vorgesehen, der
- sowohl eine Neigungsverstellung über das Neigungsverstellgetriebe und/oder den elektrischen Antrieb
- als auch eine freie Verschwenkung des Lehnen-Beschlagteils gegenüber dem Sitz-Beschlagteil bei betätigter Lehnen-Löseeinrichtung
begrenzt.

Eine weitere Lösung der der Erfindung zugrunde liegenden Aufgabe stellt ein Fahrzeugsitz dar, in dem mindestens ein Fahrzeugsitzbeschlag Einsatz findet wie dieser zuvor erläutert worden ist. Vorzugsweise findet auf den beiden Seiten des Fahrzeugsitzes jeweils ein derartiger Fahrzeugsitzbeschlag Einsatz.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert einen Fahrzeugsitz in einer Seitenansicht.
- **Fig. 2 bis 7**: zeigen einen Fahrzeugsitzbeschlag eines Fahrzeugsitzes gemäß Fig. 1 in unterschiedlichen Betriebsstellungen.

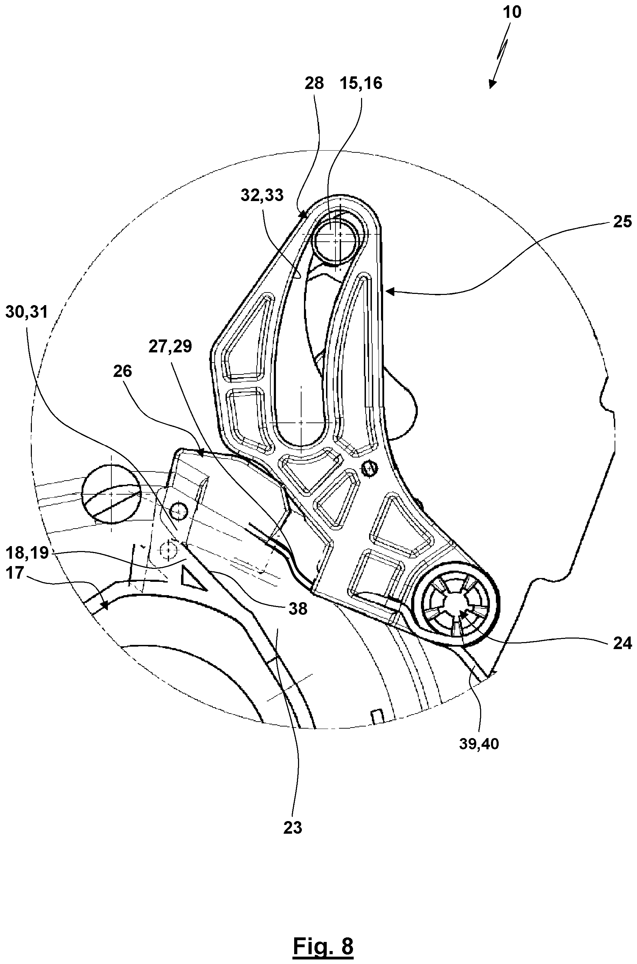

- **Fig. 8**: zeigt ein Detail VIII des Fahrzeugsitzbeschlags in der Betriebsstellung gemäß Fig. 7.

### FIGURENBESCHREIBUNG

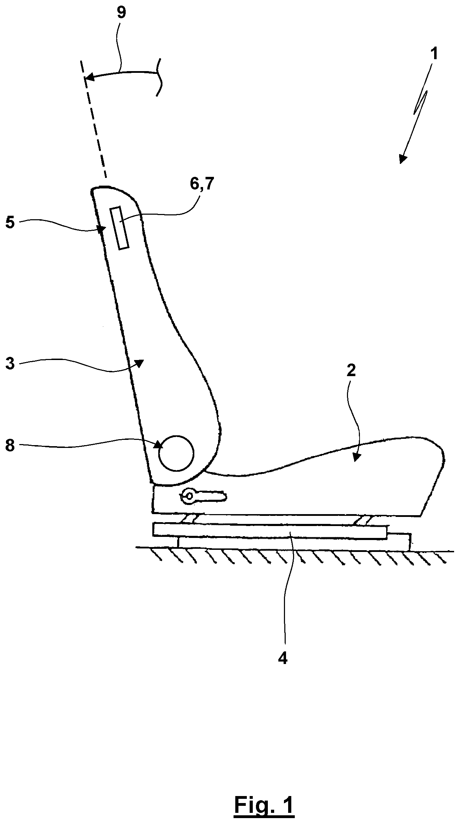

**Fig. 1** zeigt stark schematisiert einen Fahrzeugsitz 1. Der Fahrzeugsitz 1 verfügt über ein Sitzteil 2 und eine Rückenlehne, die hier auch verkürzt als Lehne 3 bezeichnet wird. Das Sitzteil 2 ist über Schienen 4 in Längsrichtung des Fahrzeugs verschieblich geführt, wobei das Sitzteil 2 in Stufen oder stufenlos in einer erreichten Längsstellung fixiert werden kann, was vorzugsweise durch eine hier nicht dargestellte Verriegelungseinrichtung erfolgt. Die Verriegelungseinrichtung kann durch eine Betätigung einer Entriegelungseinrichtung derselben gelöst werden. Der Fahrzeugsitz 1 verfügt über eine Lehnen-Löseeinrichtung 5, von der in Fig. 1 nur ein Lehnen-Löseelement 6 in Form eines Lehnen-Lösehebels 7 dargestellt ist. Das Lehnen-Löseelement 6 ist dabei bspw. im oberen seitlichen, der Fahrzeugtür zugewandten Endbereich der Lehne 3 angeordnet. Der Fahrzeugsitz 1 verfügt des Weiteren über ein Verstellrad 8, über welches durch manuelle Verdrehung desselben eine Verstellung eines Neigungswinkels 9 der Lehne 3 gegenüber dem Sitzteil 2 herbeigeführt werden kann. Möglich ist, dass alternativ oder kumulativ eine Verstellung des Neigungswinkels 9 über einen elektromotorischen Antrieb vom Benutzer herbeigeführt werden kann.

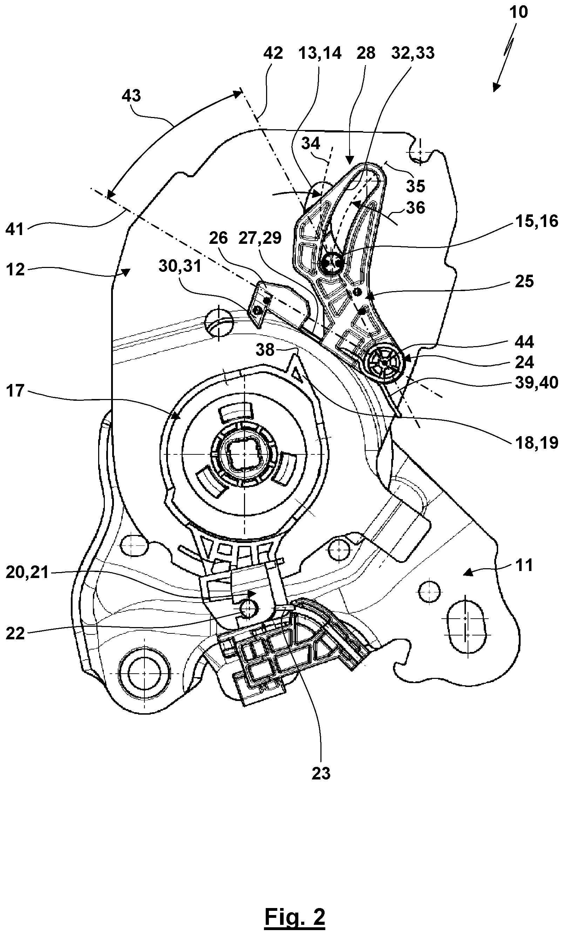

**Fig. 2** zeigt einen Fahrzeugsitzbeschlag 10. Der Fahrzeugsitzbeschlag 10 verfügt über ein Sitz-Beschlagteil 11 und ein Lehnen-Beschlagteil 12. Das Sitz-Beschlagteil 11 ist fest mit einer Tragstruktur des Sitzteils 2 verbunden, während das Lehnen-Beschlagteil 12 fest mit einer Tragstruktur der Lehne 3 verbunden ist.

Das Lehnen-Beschlagteil 12 weist eine Lehnen-Führung 13 auf, die als Langloch 14 ausgebildet ist. In der Lehnen-Führung 13 ist ein Lehnen-Löseelement 15, hier ein Lehnen-Lösebolzen 16, verschieblich geführt. Das Lehnen-Löseelement 15 wird bei einer Betätigung des Lehnen-Lösehebels 7 der Lehnen-Löseeinrichtung 5 entlang der Lehnen-Führung 13 bewegt. Zu diesem Zweck kann der Lehnen-Lösehebels 7 über einen Bowdenzug mit dem Lehnen-Löseelement 15 gekoppelt sein. Neben der im Folgenden erläuterten Funktion erfolgt über das Lehnen-Löseelement 15 auch eine Entriegelung der Lehne 3, um eine freie Verschwenkung derselben zu ermöglichen.

Ein Längsentriegelungsrad 17 ist grundsätzlich frei verdrehbar gegenüber dem Sitz-Beschlagteil 11 und dem Lehnen-Beschlagteil 12 an dem Lehnen-Beschlagteil 12 gelagert. Das Längsentriegelungsrad 17 weist einen Mitnehmer 18 auf, der hier als Vorsprung oder Zahn 19 ausgebildet ist. Des Weiteren verfügt das Längsentriegelungsrad 17 über ein Längsentriegelungselement 20, bei welchem es sich für das dargestellte Ausführungsbeispiel um eine Aufnahme 21 für einen Querbolzen 22 eines Bowdenzugs 23 handelt. Über den Bowdenzug 23 erfolgt eine Betätigung der Entriegelungseinrichtung zur Ermöglichung einer Längsverschiebung des Fahrzeugsitzes 1.

In einem Schwenklager 24 ist ein Mitnehmerhebel 25 verschwenkbar um eine Schwenkachse 44 an dem Lehnen-Beschlagteil 12 gelagert. Der Mitnehmerhebel 25 weist ein Mitnehmerteil 26, ein Federteil 27 und ein Lagerteil 28 auf. Das Federteil 27 stellt eine Elastizität um eine Biegeachse, die vertikal zur Zeichenebene gemäß Fig. 2 und parallel zur Schwenkachse der Lehne 3 orientiert ist, bereit. Vorzugsweise ist das Federteil 27 als Blattfederteil 29 ausgebildet. Das Mitnehmerteil 26 ist an einem Endbereich oder Federfußpunkt des Federteils 27 befestigt. Das Mitnehmerteil 26 bildet (vorzugsweise in dem dem Federteil 27 abgewandten Endbereich) einen Mitnehmer 30, insbesondere einen Zahn 31, aus.

Das Lagerteil 28 bildet ein Lagerauge für das Schwenklager 24 aus. Das Lagerteil 28 weist beabstandet von dem Lagerauge eine Lagerteil-Führung 32, hier in Form eines Langlochs 33, auf. Das Lehnen-Löseelement 15, hier der Lehnen-Lösebolzen 16, erstreckt sich durch das Langloch 33 und ist durch die seitlichen Begrenzungen des Langlochs 33 geführt.

In der Betriebsstellung gemäß Fig. 2, in der der Lehnen-Lösehebel 7 nicht betätigt ist, befindet sich der Lehnen-Lösebolzen 16 im unteren Endbereich der Langlöcher 14, 33, wobei der Lehnen-Lösebolzen 16 mittels einer Feder des zwischengeschalteten Bowdenzugs in diese Richtung beaufschlagt sein kann. In dieser Grundstellung des Mitnehmerhebels 25 ist das Federteil 27 nicht mit einer Federkraft beaufschlagt und der Zahn 31 befindet sich in einem größeren Abstand von der Drehachse des Längsentriegelungsrads 17 als der Zahn 19 des Längsentriegelungsrads 17. Folge hiervon ist, dass eine Verstellung des Neigungswinkels 9 der Lehne 3 gegenüber dem Sitzteil 2 durch manuelle Betätigung oder einen elektrischen Antrieb möglich ist, ohne dass der Mitnehmerhebel 25 in Wechselwirkung mit dem Längsentriegelungsrad 17 tritt.

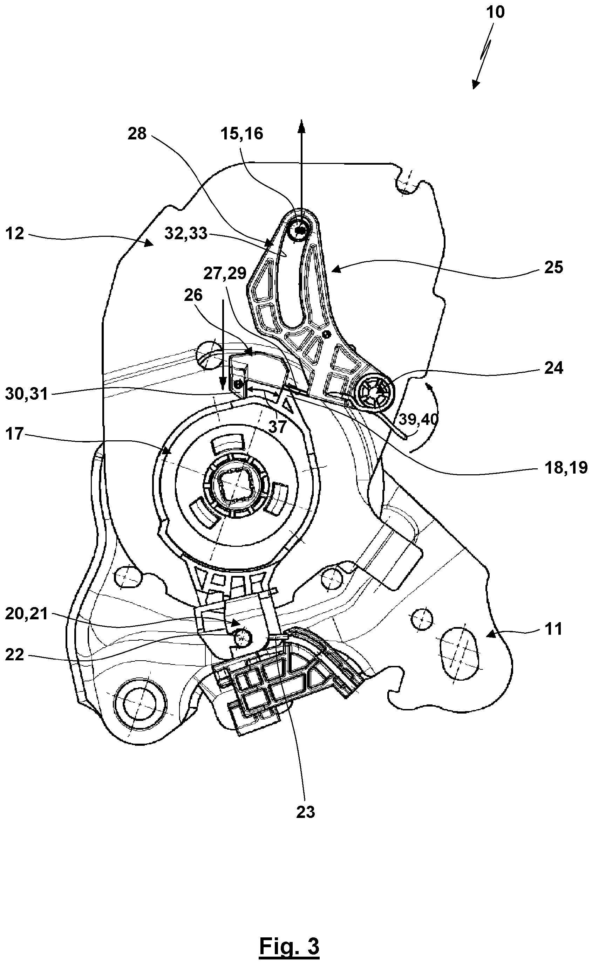

Wird der Lehnen-Lösehebel 7 betätigt, führt dies dazu, dass der Lehnen-Lösebolzen 16 von der dem Schwenklager 24 zugewandten Endbereich der Langlöcher 14, 33 weg bewegt wird bis zu dem anderen Endbereich der Langlöcher 14, 33 (vgl. **Fig. 3**). Da die Längs- oder Führungsachsen 34, 35 der Langlöcher 14, 33 unter einem Winkel 36 zueinander geneigt sind, hat dies eine Verschwenkung des Mitnehmerhebels 25 um die Schwenkachse 44 des Schwenklagers 24 zur Folge, mit der sich der Abstand des Mitnehmerteils 26 und des Zahns 31 von der Drehachse des Längsentriegelungsrads 17 verringert, bis die in Fig. 3 dargestellte Mitnehmerstellung des Mitnehmerhebels 25 erreicht ist. In dieser Mitnehmerstellung haben die Mitnehmer 18, 30 bzw. die Zähne 19, 31 denselben Abstand von der Drehachse des Längsentriegelungsrads 17. Diese haben aber noch einen Umfangsabstand 37. Möglich ist, dass die innenliegende Stirnseite des Zahns 31 an einer Mantelfläche des Längsentriegelungsrads 17 gerade anliegt, ein Spiel mit dieser ausbildet oder sogar an die Mantelfläche angepresst ist, womit sich eine geringe Vorspannung und Durchbiegung des Federteils 27 ergeben kann.

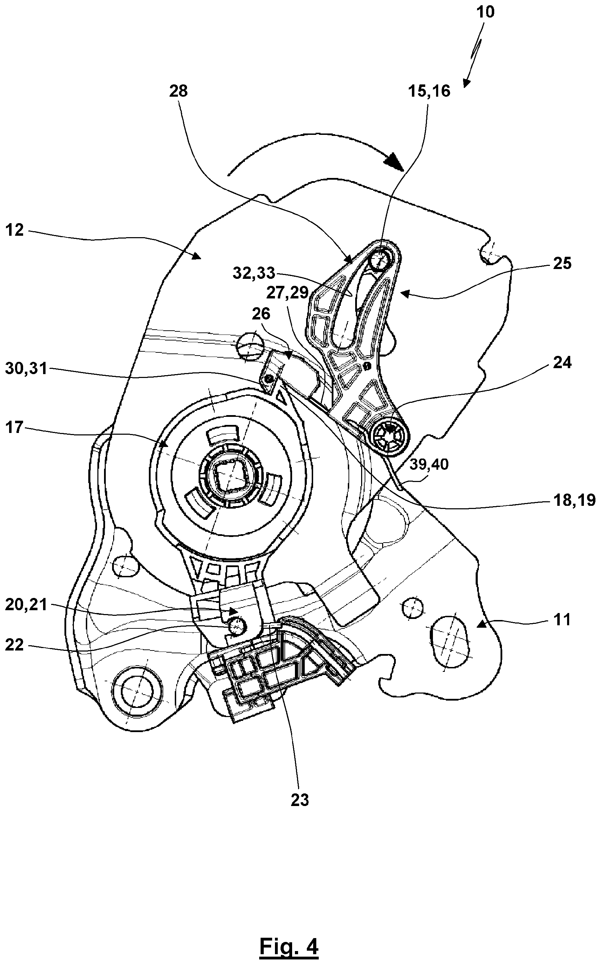

Infolge der Betätigung des Lehnen-Lösehebels 7 kann nun aus der Betriebsstellung gemäß Fig. 2 die Lehne 3 frei nach vorne verschwenkt werden, womit sich der Umfangsabstand 37 verringert, bis die Mitnehmer 18, 30 miteinander in Eingriff kommen (**Fig. 4**).

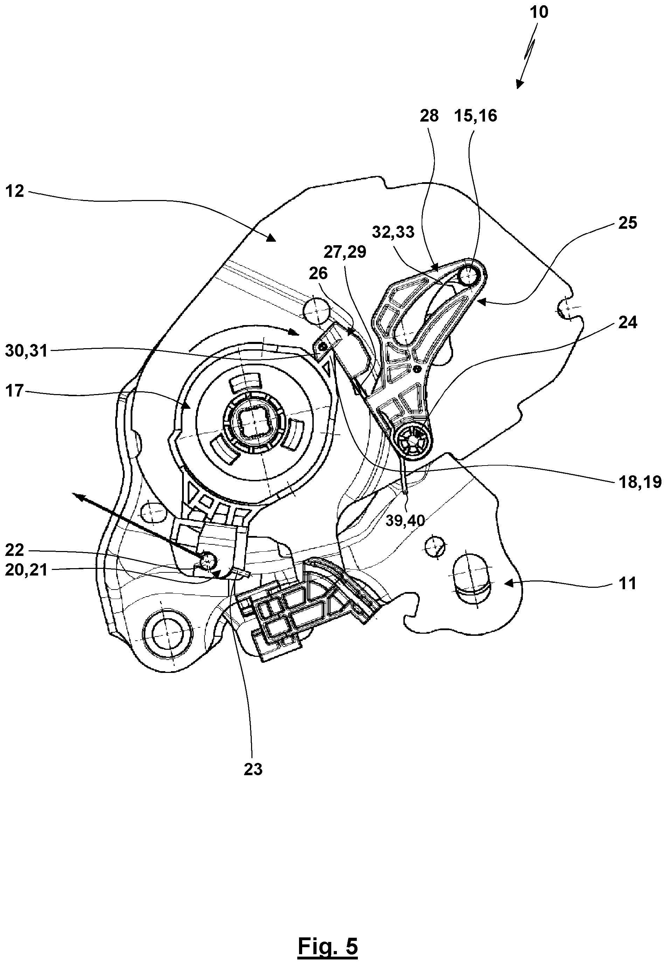

Wird dann die Lehne 3 weiter nach vorne verschwenkt (**Fig. 5**) nimmt die Rückenlehne 3 über das Lehnen-Beschlagteil 12, den Mitnehmerhebel 25 und den Mitnehmer 30 den Mitnehmer 18 des Längsentriegelungsrads 17 mit. Die so verursachte Verdrehung des Längsentriegelungsrads 17 hat zur Folge, dass auch das Längsentriegelungselement 20, hier die Aufnahme 21 für den Querbolzen 22 des Bowdenzugs 23, mitbewegt wird, womit eine Betätigung des Bowdenzugs 23 erfolgt und eine Entriegelung der Fahrzeugsitz-Längsentriegelung erfolgt (Fig. 5). Der Fahrzeugsitz 1 kann somit eine easy-entry-Stellung einnehmen, in welcher einerseits die Lehne 3 bis zu einem Anschlag nach vorne verschwenkt ist und andererseits das Sitzteil 2 infolge der Betätigung der Fahrzeugsitz-Längsentriegelung entlang der Schiene 4 nach vorne geschoben ist.

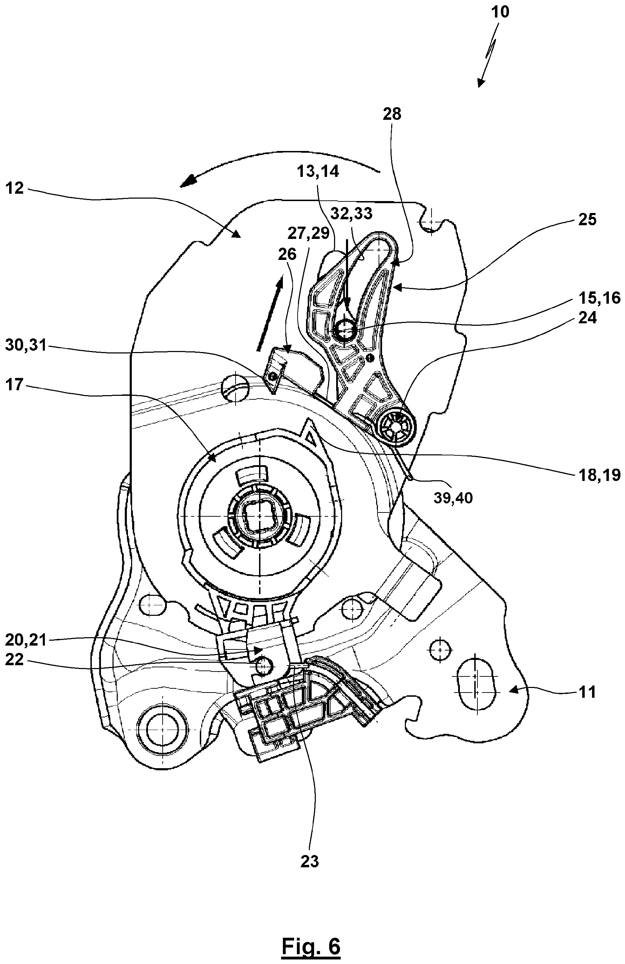

**Fig. 6** zeigt eine Rückschwenkung der Lehne 3 zurück in die Stellung gemäß Fig. 2, was hier für nicht betätigten Lehnen-Lösehebel 7 erfolgt. Da der Eingriff zwischen den Mitnehmern 18, 30 beseitigt ist, kann die Lehne 3 frei zurückgeschwenkt werden. Über eine geeignete Federeinrichtung oder auch manuell kann gleichzeitig auch das Sitzteil 2 entlang der Schiene 4 zurückbewegt werden.

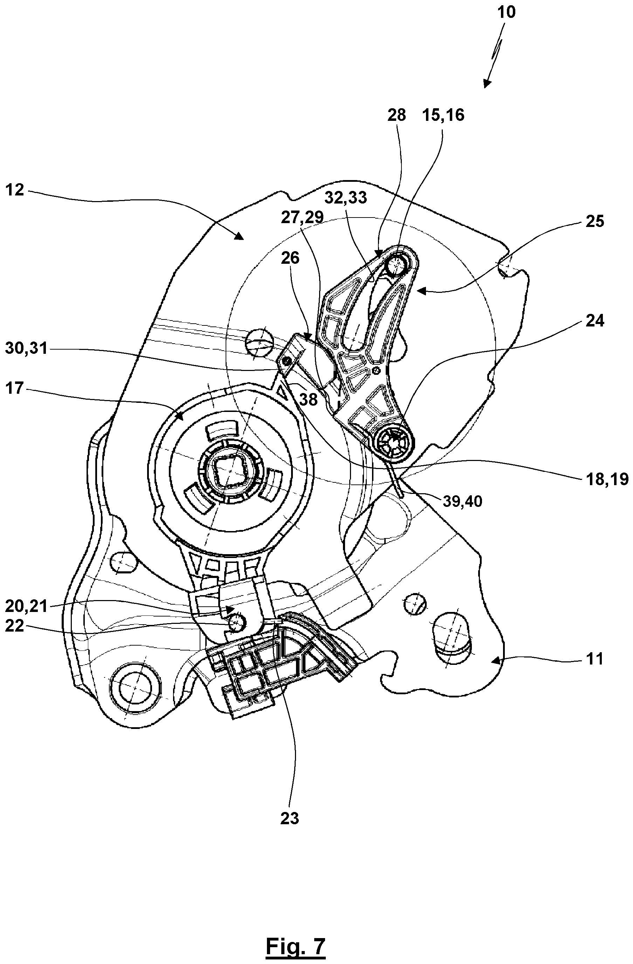

**Fig. 7** zeigt den eingangs erläuterten problematischen Fall, für den eine Betätigung der Lehnen-Löseeinrichtung 5 erfolgt, wenn die Lehne 3 bereits über einen kritischen Winkel nach vorne geneigt ist. Dies kann der Fall sein, wenn ein Endabschalter eines elektrischen Antriebs zur Verstellung der Neigung nach vorne versagt hat, so dass durch den elektrischen Antrieb die Neigung nach vorne in einem zu großen Ausmaß verändert worden ist. Ebenfalls möglich sein kann dies bei einer Verstellung der Neigung der Lehne 3 nach vorne, wobei diese Verstellung der Neigung manuell oder mittels einer elektrischen Betätigung herbeigeführt werden kann.

Die Betätigung der Lehnen-Löseeinrichtung 5 gemäß Fig. 7 führt dazu, dass zwar eine Verschwenkung des Lagerteils 28 in demselben Ausmaß erfolgt wie dies gemäß Fig. 3 erfolgt ist. Allerdings kommt der Mitnehmer 30 des Mitnehmerteils 26 zur Anlage an einen Rücken 38 des Mitnehmers 18, so dass das Mitnehmerteil 26 nicht die Mitnehmerstellung erreichen kann. Um dennoch die vollständige Bewegung des Lagerteils 28 und damit die vollständige Bewegung des Lehnen-Löseelements 15 zu ermöglichen, die wiederum die freie Verschwenkung der Lehne 3 ermöglicht, kann das Mitnehmerteil 26 infolge der Elastizität des Federteils 27 eine Ausweichbewegung ausführen. Erfolgt dann die freigegebene Verschwenkung der Lehne 3, führt die Verschwenkung der Lehne 3 angesichts des fehlenden Eingriffs der Mitnehmer 18, 30 nicht zur Verdrehung des Längsentriegelungsrads 17 und damit nicht zu einer Betätigung der Fahrzeugsitz-Längsentriegelung.

Möglich ist, dass der Mitnehmerhebel 25, hier das Lagerteil 28, zusätzlich mittels einer Feder 39, die hier als Schenkelfeder 40 ausgebildet ist, beaufschlagt ist. Hierbei ist ein Federfußpunkt der Feder 39 an dem Lehnen-Beschlagteil 12 abgestützt, während der andere Federfußpunkt an dem Lagerteil 28 abgestützt ist.

Im Gegensatz zu der Ausführungsform gemäß EP 2 352 660 B1 sind die Verbindungsachse 41 des Mitnehmerteils 26 (hier dessen Mitte oder des Mitnehmers 30) und des Schwenklagers 24 (hier der Schwenkachse 44) und die Verbindungsachse 42 des Lehnen-Lösebolzens 16 in dem Langloch 33 und des Schwenklagers 24unter einem spitzen Winkel 43 zueinander angeordnet, was für den gesamten Bewegungsbereich des Lehnen-Lösebolzens 16 in dem Langloch 33 gilt. Vorzugsweise beträgt der Winkel 43 in der Ausgangsstellung gemäß Fig. 2 30 bis 60°, während dieser in der betätigen Stellung der Lehnen-Löseeinrichtung 5 größer ist und im Bereich von 45 bis 70° liegt. Das Schwenklager 24 gibt eine Schwenkachse 44 des Lagerteils 28 vor.

### BEZUGSZEICHENLISTE

- 1: Fahrzeugsitz
- 2: Sitzteil
- 3: Lehne
- 4: Schiene
- 5: Lehnen-Löseeinrichtung
- 6: Lehnen-Löseelement
- 7: Lehnen-Lösehebel
- 8: Verstellrad
- 9: Neigungswinkel
- 10: Fahrzeugsitzbeschlag
- 11: Sitz-Beschlagteil
- 12: Lehnen-Beschlagteil
- 13: Lehnen-Führung
- 14: Langloch
- 15: Lehnen-Löseelement
- 16: Lehnen-Lösebolzen
- 17: Längsentriegelungsrad
- 18: Mitnehmer
- 19: Zahn
- 20: Längsentriegelungselement
- 21: Aufnahme
- 22: Querbolzen
- 23: Bowdenzug
- 24: Schwenklager
- 25: Mitnehmerhebel
- 26: Mitnehmerteil
- 27: Federteil
- 28: Lagerteil
- 29: Blattfederteil
- 30: Mitnehmer
- 31: Zahn
- 32: Lagerteil-Führung
- 33: Langloch
- 34: Führungsachse
- 35: Führungsachse
- 36: Winkel
- 37: Umfangsabstand
- 38: Rücken
- 39: Feder
- 40: Schenkelfeder
- 41: Verbindungsachse
- 42: Verbindungsachse
- 43: Winkel
- 44: Schwenkachse

## Patentansprüche

1. Fahrzeugsitzbeschlag (10) für einen eine Fahrzeugsitz-Längsentriegelung aufweisenden Fahrzeugsitz (1), wobei der Fahrzeugsitzbeschlag (10) einen Mitnehmerhebel (25) aufweist, über den die Fahrzeugsitz-Längsentriegelung betätigbar ist,
**dadurch gekennzeichnet, dass**
der Mitnehmerhebel (25)
a) ein Lagerteil (28), im Bereich dessen der Mitnehmerhebel (25) drehbar um eine Schwenkachse (44) gelagert ist,
b) ein Mitnehmerteil (26), welches in einer Mitnehmerstellung in Eingriff mit einem Längsentriegelungsrad (17) kommt, und
c) ein Federteil (27), über das das Mitnehmerteil (26) frei auskragend an dem Lagerteil (28) gehalten ist, so dass das Mitnehmerteil (26) gegenüber dem Lagerteil (28) um eine beabstandet von der Schwenkachse (44) des Lagerteils (28) angeordnete Schwenkachse verschwenkbar ist,
aufweist.

2. Fahrzeugsitzbeschlag (10) nach Anspruch 1 mit
a) einem Sitz-Beschlagteil (11),
b) einem Lehnen-Beschlagteil (12) und
c) einem Neigungsverstellgetriebe, über welches eine Neigungswinkel (9) des Sitz-Beschlagteils (11) gegenüber dem Lehnen-Beschlagteil (12) veränderbar ist,
d) einer Lehnen-Löseeinrichtung (5), bei deren Betätigung das Lehnen-Beschlagteil (12) frei gegenüber dem Sitz-Beschlagteil (11) verschwenkbar ist,
e) wobei das Längsentriegelungsrad (17) relativ zu dem Lehnen-Beschlagteil (12) drehbar ist und ein Längsentriegelungselement (20) aufweist, welches mit einer Fahrzeugsitz-Längsentriegelung derart koppelbar ist, dass bei einer Verdrehung des Längsentriegelungsrads (17) die Fahrzeugsitz-Längsentriegelung entriegelt werden kann, und
f) das Lagerteil (28) des Mitnehmerhebels (25) verschwenkbar um die Schwenkachse (44) an dem Lehnen-Beschlagteil (12) gelagert ist und durch eine Betätigung der Lehnen-Löseeinrichtung (5) in eine Mitnehmerstellung verschwenkbar ist, in welcher der Mitnehmerhebel (25) in Eingriff mit dem Längsentriegelungsrad (17) kommt, so dass das Längsentriegelungsrad (17) über den Mitnehmerhebel (25) drehfest mit dem Lehnen-Beschlagteil (12) gekoppelt ist und über eine Verschwenkung des Lehnen-Beschlagteils (12) die Fahrzeugsitz-Längsentriegelung entriegelt werden kann.

3. Fahrzeugsitzbeschlag (10) nach Anspruch 1 oder 2, **dadurch gekennzeichnet, dass** das Federteil (27) ein Blattfederteil (29) ist.

4. Fahrzeugsitzbeschlag (10) nach Anspruch 3, **dadurch gekennzeichnet, dass** das Blattfederteil (29) stoffschlüssig in oder an dem Lagerteil (28) und/oder dem Mitnehmerteil (26) gehalten ist.

5. Fahrzeugsitzbeschlag (10) nach einem der Ansprüche 2 bis 4, **dadurch gekennzeichnet, dass** das Lagerteil (28) eine Lagerteil-Führung (32) aufweist, welche gegenüber einer Lehnen-Führung (13) des Lehnen-Beschlagteils (12) unter einem Winkel (36) geneigt ist, wobei die Lehnen-Löseeinrichtung (5) ein Lehnen-Löseelement (15) aufweist, welches sowohl durch die Lagerteil-Führung (32) als auch durch die Lehnen-Führung (13) geführt ist und sich mit einer Betätigung der Lehnen-Löseeinrichtung (5) sowohl entlang der Lagerteil-Führung (32) als auch entlang der Lehnen-Führung (13) bewegt.

6. Fahrzeugsitzbeschlag (10) nach Anspruch 5, **dadurch gekennzeichnet, dass** die Lehnen-Führung (13) und/oder die Lagerteil-Führung (32) eine gekrümmte Führungsachse (34; 35) aufweisen/aufweist.

7. Fahrzeugsitzbeschlag (10) nach Anspruch 5 oder 6, **dadurch gekennzeichnet, dass** die Lagerteil-Führung (32) und die Lehnen-Führung (13) als Langlöcher (33; 14) ausgebildet sind und das Lehnen-Löseelement (15) ein Gleitstück oder ein Lehnen-Lösebolzen (16) ist, welches oder welcher gleitend in den Langlöchern (33; 14) geführt ist.

8. Fahrzeugsitzbeschlag (10) nach einem der vorhergehenden Ansprüche 5 bis 7, **dadurch gekennzeichnet, dass** der Fahrzeugsitzbeschlag zwei Verbindungsachsen (41,42) enthält, wobei
a) die Verbindungsachse (42) eines Angriffspunkts des Lehnen-Löseelements (15) an dem Lagerteil (28) und der Schwenkachse (44) für die Verschwenkung des Lagerteils (28) und
b) die Verbindungsachse (41) des Mitnehmerteils (26) und der Schwenkachse (44) für die Verschwenkung des Lagerteils (28) ohne elastische Verformung des Federteils (27)
einen spitzen Winkel (43) bilden.

9. Fahrzeugsitzbeschlag (10) nach einem der vorhergehenden Ansprüche, **dadurch gekennzeichnet, dass** ein Anschlag vorgesehen ist, der
a) sowohl eine Neigungsverstellung über das Neigungsverstellgetriebe und/oder den elektrischen Antrieb
b) als auch eine freie Verschwenkung des Lehnen-Beschlagteils (12) gegenüber dem Sitz-Beschlagteil (11) bei betätigter Lehnen-Löseeinrichtung (5)
begrenzt.

10. Fahrzeugsitz (1) mit mindestens einem Fahrzeugsitzbeschlag (10) nach einem der Ansprüche 1 bis 9.

## Claims

1. Vehicle seat fitting (10) for a vehicle seat (1) comprising a vehicle seat longitudinal unlocking device, wherein the vehicle seat fitting (10) comprises a follower lever (25) by which it is possible to actuate the vehicle seat longitudinal unlocking device,
**characterised in that**
the follower lever (25) comprises
a) a bearing part (28) in the region of which the follower lever (25) is supported for being rotated about a pivot axis (44),
b) a follower part (26) which in a follower position engages a longitudinal unlocking wheel (17) and
c) a spring part (27) by which the follower part (26) is held in a freely protruding or cantilevered way on the bearing part (28), such that it is possible to pivot the follower part (26) relative to the bearing part (28) about a pivot axis which is arranged remote from the pivot axis (24) of the bearing part (28).

2. Vehicle seat fitting (10) of claim 1 comprising
a) a seat fitting part (11),
b) a backrest fitting part (12) and
c) an inclination changing transmission by which it is possible to change the inclination angle (9) of the seat fitting part (11) relative to the backrest fitting part (12),
d) a backrest releasing device (5) which upon actuation allows a free pivoting of the backrest fitting part (12) relative to the seat fitting part (11),
e) wherein the longitudinal unlocking wheel (17) can be rotated relative to the backrest fitting part (12) and the longitudinal unlocking wheel (17) comprises a longitudinal unlocking element (20) which is coupled to a vehicle seat longitudinal unlocking device in a way such that when rotating the longitudinal unlocking wheel (17) the vehicle seat longitudinal unlocking device can be unlocked and
f) the bearing part (28) of the follower lever (25) is supported for being pivoted about the pivot axis (44) on the backrest fitting part (12) and the bearing part (28) of the follower lever (25) can be pivoted by an actuation of the backrest release device (5) into a follower position wherein the follower lever (25) engages the longitudinal unlocking wheel (17) so that the longitudinal unlocking wheel (17) is coupled with a fixation against rotation via the follower lever (25) to the backrest fitting part (12) and it is possible to unlock the vehicle seat longitudinal unlocking device by a pivoting of the backrest fitting part (12).

3. Vehicle seat fitting (10) of claim 1 or 2, **characterised in that** the spring part (27) is a leaf spring part (29).

4. Vehicle seat fitting (10) of claim 3, **characterised in that** the leaf spring part (29) is held by an adhesive bond or a material bond in or on the bearing part (28) and/or the follower part (26).

5. Vehicle seat fitting (10) of one of claims 2 to 4, **characterised in that** the bearing part (28) comprises a bearing part guidance (32) which is inclined with an angle (36) relative to a backrest guidance (13) of the backrest fitting part (12) wherein the backrest release device (5) comprises a backrest release element (15) which is both guided by the bearing part guidance (32) as well as by the backrest guidance (13) and which moves both along the bearing part guidance (32) as well as along the backrest guidance (13) when actuating the backrest release device (5).

6. Vehicle seat fitting (10) of claim 5, **characterised in that** the backrest guidance (13) and/or the bearing part guidance (32) comprise/comprises a curved guiding axis (34; 35).

7. Vehicle seat fitting (10) of claim 5 or 6, **characterised in that** the bearing part guidance (32) and the backrest guidance (13) are embodied as elongated holes (33; 14) and the backrest release element (15) is a sliding piece or a backrest release bolt (16) which is slidingly guided in the elongated holes (33; 14).

8. Vehicle seat fitting of one of the preceding claims 5 to 7, **characterised in that** the vehicle seat fitting comprises two connecting axes (41, 42) wherein
a) the connecting axis (42) of a point of action of the backrest release element (15) at the bearing part (28) and the pivot axis (44) for pivoting the bearing part (28) and
b) the connecting axis (41) of the follower part (26) and the pivot axis (44) for pivoting the bearing part (28) without an elastic deformation of the spring part (27)
form an acute angle (43).

9. Vehicle seat fitting (10) of one of the preceding claims, **characterised in that** a stop is provided which limits
a) both a change of the inclination via the inclination changing transmission and/or the electric drive
b) as well as a free pivoting of the backrest fitting part (12) relative to the seat fitting part (11) when the backrest release device (5) is actuated.

10. Vehicle seat (1) comprising at least one vehicle seat fitting (10) of one of claims 1 to 9.

## Revendications

1. Garniture de siège de véhicule (10) pour un siège de véhicule (1) comprenant un déverrouillage longitudinal de siège de véhicule, dans lequel la garniture de siège de véhicule (10) comprend un levier d'entraînement (25) par l'intermédiaire duquel le déverrouillage longitudinal de siège de véhicule peut être actionné,
**caractérisé en ce que**
le levier d'entraînement (25) comprend
a) une partie de logement (28) au niveau de laquelle le levier d'entraînement (25) est logé de manière rotative autour d'un axe de pivotement (44),
b) une partie d'entraînement (26) qui, dans une position d'entraînement, est emboîtée avec une roue de déverrouillage longitudinal (17) et
c) une partie de ressort (27) par l'intermédiaire de laquelle la partie d'entraînement (26) est maintenue libre de manière surplombante sur la partie de logement (28), de façon à ce que la partie d'entraînement (26) puisse être pivotée autour d'un axe de pivotement disposé à une certaine distance de l'axe de pivotement (44) de la partie de logement (28).

2. Garniture de siège de véhicule (10) selon la revendication 1, avec
a) une partie de garniture d'assise (11),
b) une partie de garniture de dossier (12) et
c) un mécanisme de réglage de l'inclinaison par l'intermédiaire duquel un angle d'inclinaison (9) de la partie de garniture d'assise (11) par rapport à la partie de garniture de dossier (12) peut être modifié,
d) un dispositif de relâchement de dossier (5) lors de l'actionnement duquel la partie de garniture de dossier (12) peut être pivotée librement par rapport à la partie de garniture d'assise (11),
e) dans lequel la roue de déverrouillage longitudinal (17) est rotative par rapport à la partie de garniture de dossier (12) et comprend un élément de déverrouillage longitudinal (20) qui peut être couplé avec un déverrouillage longitudinal de siège de véhicule de façon à ce que, lors d'une rotation de la roue de déverrouillage longitudinal (17), le déverrouillage longitudinal de siège de véhicule puisse être déverrouillé et
f) la partie de logement (28) du levier d'entraînement (25) est logée de manière pivotante autour de l'axe de pivotement (44) au niveau de la partie de garniture de dossier (12) et peut être pivotée, grâce à un actionnement du dispositif de relâchement de dossier (5), vers une position d'entraînement dans laquelle le levier d'entraînement (25) s'emboîte avec la roue de déverrouillage longitudinal (17), de façon à ce que la roue de déverrouillage longitudinal (17) soit couplée, par l'intermédiaire du levier d'entraînement (25), de manière solidaire en rotation avec la partie de garniture de dossier (12) et de façon à ce que le déverrouillage longitudinal de siège de véhicule puisse être déverrouillé grâce à un pivotement de la partie de garniture de dossier (12).

3. Garniture de siège de véhicule (10) selon la revendication 1 ou 2, **caractérisé en ce que** la partie de ressort (27) est une partie de ressort à lames (29).

4. Garniture de siège de véhicule (10) selon la revendication 3, **caractérisé en ce que** la partie de ressort à lames (29) est maintenu par liaison de matière dans ou sur la partie de logement (28) et/ou la partie d'entraînement (26).

5. Garniture de siège de véhicule (10) selon l'une des revendications 2 à 4, **caractérisé en ce que** la partie de logement (28) comprend un guidage de partie de logement (32) qui est inclinée par rapport à un guidage de dossier (13) de la partie de garniture de dossier (12) avec un angle (36), dans lequel le dispositif de relâchement de dossier (5) comprend un élément de relâchement de dossier (15) qui est guidé aussi bien par le guidage de partie de logement (32) que par le guidage de dossier (13) et se déplace avec un actionnement du dispositif de relâchement de dossier (5) aussi bien le long du guidage de partie de logement (32) que le long du guidage de dossier (13).

6. Garniture de siège de véhicule (10) selon la revendication 5, **caractérisé en ce que** le guidage de dossier (13) et/ou le guidage de partie de logement (32) présente un axe de guidage incurvé (34 ; 35).

7. Garniture de siège de véhicule (10) selon la revendication 5 ou 6, **caractérisé en ce que** le guidage de partie de logement (32) et le guidage de dossier (13) sont conçus comme des trous oblongs (33 ; 14) et l'élément de relâchement de dossier (15) est une pièce de glissement ou une tige de relâchement de dossier (16) qui est guidé de manière glissante dans les trous oblongs (33 ; 14).

8. Garniture de siège de véhicule (10) selon l'une des revendications 5 à 7, **caractérisé en ce que** la garniture de siège de véhicule contient deux axes de liaison (41, 42), dans lequel
a) l'axe de liaison (42) d'un point d'application de l'élément de relâchement de dossier (15) sur la partie de logement (28) et de l'axe de pivotement (44) pour le pivotement de la partie de logement (28) et
b) l'axe de liaison (41) de la partie d'entraînement (26) et de l'axe de pivotement (44) pour le pivotement de la partie de logement (28) sans déformation élastique de la partie de ressort (27)
forment un angle aigu (43).

9. Garniture de siège de véhicule (10) selon l'une des revendications précédentes, **caractérisé en ce qu'**une butée est prévue, qui limite
a) aussi bien un réglage d'inclinaison par l'intermédiaire du mécanisme de réglage d'inclinaison et/ou de l'entraînement électrique
b) qu'un pivotement livre de la partie de garniture de dossier (12) par rapport à la partie de garniture d'assise (11) lorsque le dispositif de relâchement de dossier (5) est actionné.

10. Siège de véhicule (1) avec au moins une garniture de siège de véhicule (10) selon l'une des revendications 1 à 9.
